# EUROPÄISCHE PATENTSCHRIFT

(11) **EP 1 338 867 B1**
(45) Veröffentlichungstag und Bekanntmachung des Hinweises auf die Patenterteilung: **09.06.2010**
(21) Anmeldenummer: 03004136.2
(22) Anmeldetag: 26.02.2003
(51) Int. Cl.: G01C 21/36, G08G 1/09, G08G 1/0967, G08G 1/0968, G08G 1/0969

(54) **Verkehrsdaten-Informationssystem**
Information system for traffic data
Système d'information pour des données de trafic

(30) Priorität: 26.02.2002 DE 10207993
(43) Veröffentlichungstag der Anmeldung: 27.08.2003
(73) Patentinhaber: Daimler AG, 70327 Stuttgart (DE)
(72) Erfinder: Franz, Walter, 89608 Griesingen (DE); Hiller, Andreas, 70378 Stuttgart (DE); Vollmer, Dieter, 73614 Schorndorf (DE)
(74) Vertreter: JENSEN & SON

(56) Entgegenhaltungen:
- EP-A- 0 867 851
- WO-A-99/27717
- DE-A- 19 806 197
- DE-A- 19 941 966

## Beschreibung

Die Erfindung betrifft Systeme, die geeignet sind, in einem Fahrzeug verkehrsbezogene Daten aufzunehmen und dem Fahrer über Signale entsprechende Informationen zu übermitteln.

Bekannte Systeme dieser Art sind beispielsweise Autoradios mit integriertem Verkehrsfunkdekoder, die sich bei Empfang von Verkehrsmeldungen automatisch einschalten bzw. eine laufende Musikwiedergabe - z.B. einer CD - unterbrechen, so dass der Fahrer die gesendeten Meldungen zur Verkehrslage hören kann. Andere bekannte Vorrichtungen sind beispielsweise GPS-Geräte, die von Satelliten Positionsdaten empfangen und auswerten und dem Fahrer die aktuelle Position des Fahrzeugs über ein Display anzeigen.

Einige dieser Positionsbestimmungsgeräte können auch natürlichsprachliche akustische Hinweise zur Zielführung generieren.

Bei den genannten Einrichtungen erhält der Fahrer von dem jeweiligen Gerät stets nur die Informationen der speziell zugeordneten Datenquelle, in obigem Beispiel also ausschließlich Positionsdaten und Zielführungshinweise über GPS, Meldungen zur Verkehrslage nur über das Autoradio.

Die Entwicklung geht dahin, dass für Verkehrsteilnehmer durch erweiterte Kommunikationseinrichtungen von verschiedenen Quellen eine Vielzahl von Informationen über das Straßennetz, den Verkehr in dem Netz und interessante Geschehnisse entlang des Straßennetzes zur Verfügung gestellt werden. Zur Übertragung der Informationen stehen schon heute verschiedene Kommunikationstechniken zur Verfügung. Eine Zentrale kann beispielsweise Informationen über Mobilfunk gezielt an einzelne Fahrzeuge übermitteln, oder durch ein Zellbroadcast eingeschränkt nur an Fahrzeuge in einer Region. Über Digitales Radio (DAB) oder RDS können Informationen einer Zentrale überregional verbreitet werden. Durch Bakenkommunikation können Hinweise an Fahrzeuge an einer bestimmten Position gegeben werden. Darüber hinaus bietet Fahrzeug-Fahrzeug-Kommunikation die Möglichkeit, dass Fahrzeuge untereinander direkt Informationen austauschen und weitergeben.

Grundsätzlich sollten für eine Fahrtoptimierung möglichst viele verfügbare Informationen dem Fahrer übermittelt werden. Bei Einsatz verschiedener Geräte (Radio, GPS, Mobilfunkeinrichtung usw.) führt dies jedoch zu dem Nachteil, dass der Fahrer parallel zu den Aufgaben der Fahrzeugsteuerung seine Aufmerksamkeit auf mehrere, typischerweise unterschiedliche Signale generierende Komponenten richten muß. Dies könnte jedoch während der Fahrt zu einer Ablenkung vom unmittelbaren Verkehrsgeschehen führen und so eine Unfallgefahr erhöhen.

Es ist daher wichtig, relevante Daten zu selektieren und zu verdichten. So ist es etwa im Zusammenhang mit einem Navigationssystem möglich, nur die Daten auszufiltern, welche die aktuell gewählte Route betreffen. Ebenso wichtig ist es, die Informationen über geeignete Medien (Display, Lautsprecher usw.) schnell und leicht erfaßbar mitzuteilen, ohne die Aufmerksamkeit des Fahrers mehr als nötig von Fahraufgaben abzulenken.

Systeme gemäß dem Oberbergriff des Anspruchs 1 sind aus z.B. DE 19941966, DE 19806197 oder EP 0867851 bekannt.

Die vorliegende Erfindung geht aus von den geschilderten Varianten zur Übermittlung verkehrsbezogener Informationen an Fahrzeuginsassen als Stand der Technik. Ihr liegt die Aufgabe zugrunde, ein verbessertes System zur mobilen Verkehrsinformation zu entwickeln, das erhaltene Daten nach Relevanzkriterien aufbereitet und wiedergibt und insbesondere auch die genannten Nachteile bezüglich eines relativ hohen erforderlichen Aufwands an Aufmerksamkeit seitens des Fahrers weitgehend überwindet.

Diese Aufgabe wird bei einer Vorrichtung mit den Merkmalen des Anspruchs 1 gelöst. Weitere Einzelheiten der Erfindung und Vorzüge verschiedener Ausführungsformen ergeben sich aus den Merkmalen der anhängigen Ansprüche.

Die erfindungsgemäße Vorrichtung wird im folgenden anhand einer bevorzugten Ausführungsform beschrieben, wobei Bezug genommen wird auf die Abbildungen. Dabei zeigt:
- Figur 1:: Beispiel für eine simultane Darstellung der verschiedenen Daten auf einem Display
- Figur 2:: Beispiel zur Darstellung von Informationen über Parkmöglichkeiten
- Figur 3:: Ein Anwendungsbeispiel mit einer Übertragung von Verkehrsinformationen mittels Interfahrzeug-Kommunikationssystemen

Die erfindungsgemäße Vorrichtung ist als Verkehrsdaten-Informationssystem in ein Fahrzeug - z.B. in der Konsole - integriert und mit diversen Empfangsgeräten ausgestattet, die die unterschiedlichen verkehrsrelevanten Daten von verschiedenen Quellen aufnehmen. Hierzu gehören beispielsweise Broadcast-, Global-Positioning-, Mobilfunk- und Interfahrzeug-Kommunikations-Systeme.

Die über die verschiedenen Systeme eingehenden Daten beinhalten ein entsprechend breites Spektrum an unterschiedlichen Informationen: Diese können beispielsweise die Verkehrslage auf der Strecke betreffen, die Parkplatzsituation in der Umgebung oder auch Benzinpreisangaben von Tankstellen an der Strecke.

Allen diesen Informationen ist gemeinsam, dass sie dynamisch sind, d.h. nur eine beschränkte zeitliche Gültigkeit haben und veralten: Die bis zu einem aktuellen Abfrage-Zeitpunkt empfangenen Daten sind also allein schon durch den Zeitfaktor für den Fahrer von unterschiedlicher Informationsgüte. Das vorgeschlagene Verkehrsdaten-Informationssystem verfügt daher über Mittel, die empfangenen Daten zu speichern und ihnen zeitliche Kennungen als Parameter für eine Selektion zuzuordnen.

Neben der verstrichenen Zeit gibt es auch andere Faktoren, die die Informationsgüte beeinflussen. So können z.B. auch zeitgleich von verschiedenen Quellen empfangene Daten, die denselben Aspekt betreffen, eine unterschiedliche Güte aufweisen. Beispielsweise sind Staumeldungen regionaler Rundfunksender im allgemeinen präziser und aktueller als entsprechende Informationen überregionaler Sender.

Für eine Einstufung bzgl. der Informationsgüte ist es auch wesentlich, wie gut die Daten aus verschiedenen Quellen übereinstimmen. Daneben ist auch die Anzahl der Quellen, die eine inhaltlich übereinstimmende Information übertragen, ein Indiz für die Aktualität, Korrektheit oder Bedeutung dieser Information. - Das erfindungsgemäße Verkehrsdaten-Informationssystem verfügt daher über Mittel, welche beim Empfang der Daten neben der 'eigentlichen' Information die aufgeführten Faktoren (Herkunft, Häufigkeit, Übereinstimmung) detektieren, speichern und als Parameter den jeweiligen Daten im Sinne einer Informationsgüte zuordnen.

Zusätzlich ist das erfindungsgemäße Verkehrsdaten-Informationssystem vorzugsweise mit Mitteln ausgestattet, die entsprechende Daten über Position des Fahrzeugs, aktuelle Geschwindigkeit, geplante Route usw. aufnehmen und in Beziehung zu empfangenen Mitteilungen setzen können. Durch Kombination der Fahrzeug- bzw. Fahrt- bezogenen Daten mit den empfangenen (und hinsichtlich ihrer Informationsgüte bewerteten) Meldungen kann eine Bewertung der Informationen nach Relevanz erfolgen.

Unter Relevanz ist hier die Zusammenführung der Informationsgüte mit bspw. den o.g. fahrzeug- bzw. fahrtbezogenen Daten zu verstehen.
Beispielsweise kann eine sichere Information (eine Information von maximaler Informationsgüte), die ein Ereignis in großer Entfernung vom aktuellen Fahrzeugort betrifft, geringe Relevanz haben. Umgekehrt können unsichere Informationen aus der näheren Umgebung des Fahrzeuges aufgrund der Nähe eine erhebliche Relevanz aufweisen.
Dabei reduziert sich im Fall der Abwesenheit von Daten, die nicht die Informationsgüte betreffen, die Relevanz auf die Informationsgüte und umgekehrt.

Zur Weitergabe der empfangenen und nach hinsichtlich ihrer Relevanz ausgewerteten Informationen ist das Verkehrsdaten-Informationssystem mit Mitteln ausgestattet, die Signale unterschiedlicher Art erzeugen können. In der bevorzugten Ausführungsform sind optische, akustische bzw. haptische Signalgeber vorgesehen, die einzeln oder kombiniert vom Verkehrsdaten-Informationssystem angesteuert werden. Dadurch können nicht nur die Informationen selbst übermittelt werden - beispielsweise eine Wiedergabe einer Meldung über Lautsprecher oder die Anzeige eines Staus auf einem Display - sondern auch Hinweise auf die Relevanz der Information.

Mit entsprechender Ausstattung bietet sich eine Vielzahl an medientechnischen Möglichkeiten: So kann eine Information von hoher Relevanz beispielsweise akustisch durch einen auffälligen (Klangfarbe, Tonhöhe, Lautstärke) Signalton gekennzeichnet werden oder auf einem Display mittels Intensität, Farbton, Farbgebung, Blinken usw. optisch hervorgehoben werden. Daneben sind auch haptisch auffällige Signale (z.B. verschieden starkes Schwingen, hochfrequentes oder niederfrequentes Vibrieren, starker haptischer Widerstand) zur Darstellung der Relevanz der Information sehr erfolgreich. Weniger relevante Informationen werden dabei gegenüber den relevanteren Informationen differenziert und weniger auffällig dargestellt. Durch diese Erweiterung auf zusätzlich übermittelte Relevanzangaben kann der Fahrer aus einer Vielzahl von Informationen schnell und intuitiv die für ihn wesentlichen Daten entnehmen.

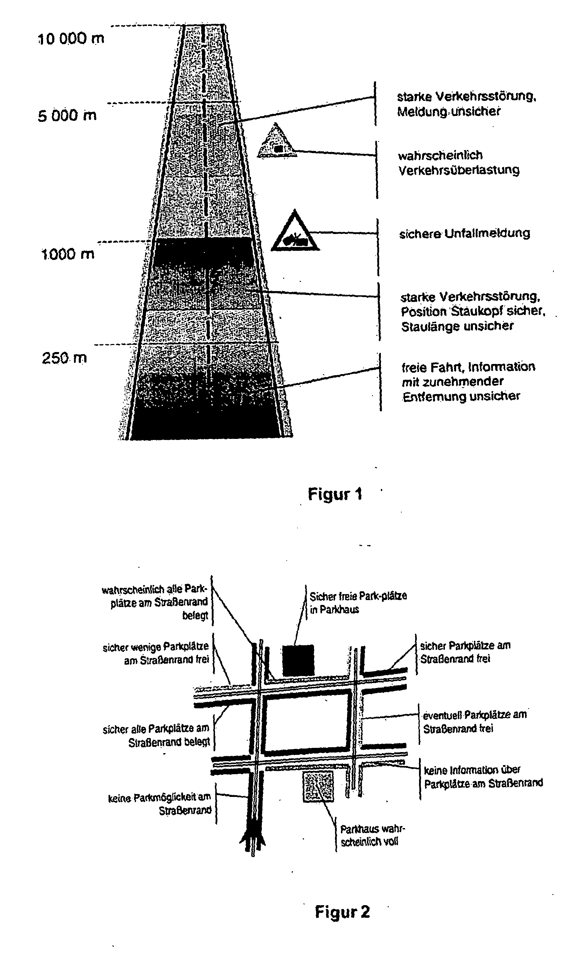

Figur 1 zeigt ein Beispiel einer solchen Darstellung auf einem Display. Die Route wird in perspektivischer Form dargestellt. Hierdurch ist die Auflösung in der Nähe besser als in der Ferne. Seitlich ist in diesem Beispiel eine Entfernungsskala wiedergegeben, die aber in anderer Ausführung durch eine Zeitskala ergänzt oder ersetzt werden kann, welche die voraussichtliche Zeit bis zum Erreichen bestimmter Marken anzeigt. Eine solche Darstellung kann auch die Fahrtdynamik wiedergeben (Bewegung der gestrichelten Fahrbahnmarkierung und Piktogramme auf den Fahrer zu) so dass - zumindest nach kurzer Eingewöhnung - für den Fahrer die jeweilige Verkehrssituation intuitiv leicht erfassbar ist. Beispielsweise können unterschiedliche Bereiche der Strecke durch Farbgebung gekennzeichnet werden: 'grün' signalisiert freien Verkehr, 'rot' kennzeichnet Problemstellen. Neben dem Farbton als Information kann die Intensität genutzt werden, um die beispielsweise die Relevanz der Information anzuzeigen. Singuläre Ereignisse, wie Unfall, Streckenüberlastung, Glätte können durch einfache Piktogramme dargestellt werden. Auch hier kann die Farbintensität variieren um beispielsweise die Relevanz oder die Güte der Information anzuzeigen.

Figur 2 zeigt ein Beispiel für eine Darstellung von Parkplatzinformationen. Hierbei wird nicht die Information entlang einer Route angezeigt, sondern ein Netzausschnitt des jeweiligen Suchgebiets. Beispielsweise gibt der Farbton an, ob noch Plätze frei sind, die Farbintensität, wie zuverlässig die Information ist. Eine solche Darstellung kann sowohl für Parkhäuser, als auch für Parkmöglichkeiten am Straßenrand eingesetzt werden.

In der bevorzugten Ausführungsform sind die jeweiligen Signale variabel und frei wählbar, d.h. sie können durch den Fahrer individuell den verschiedenen Informationsarten, sowie Informationsgüte und Relevanzangaben zugeordnet werden. Auf diese Weise läßt sich eine subjektiv optimale Wiedergabe konfigurieren. Selbst erstellte Kombinationen aus optischen, akustischen und haptischen Signalen bieten die Möglichkeit, Informationen zusammen mit Angaben zu ihrer Informationsgüte und Relevanz dem Fahrer in kompakter, intuitiver Form zu präsentieren.

Für diese Funktion weist das Verkehrsdaten-Informationssystem vorzugsweise Eingabemittel (z.B. Touch-Screen, Spracheingabe usw.) auf, über die der Fahrer Daten (beispielsweise bzgl. Fahrzeugtyp, Fahrtziel; bei Transportfahrzeugen evtl. auch Maße, Gewicht oder Art der Ladung) eingeben kann.

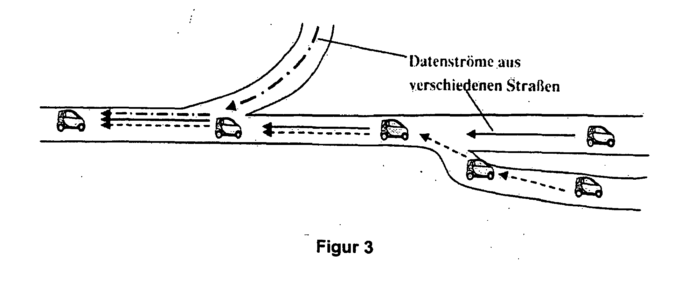

Figur 3 zeigt ein Beispiel für den Austausch von Verkehrsinformationen zwischen Fahrzeugen. Die Fahrzeuge senden Daten, wie z.B. die Geschwindigkeit und ihren aktuellen Aufenthaltsort, an andere Fahrzeuge der gleichen und entgegengesetzten Fahrtrichtung. Durch die Verknüpfung mit Zeitund Positionsdaten kann in einem Fahrzeug ein empfangendes Verkehrsdaten-Informationssystem die Verkehrssituation entlang der Route extrahieren und dem Fahrer entsprechend übermitteln. Die Informationsgüte hängt hier beispielsweise davon ab, wie lange die Laufzeit und die Intervalle der Kommunikation sind, von wie vielen Fahrzeugen Meldungen vorliegen und wie gut die einzelnen Meldungen zu einer Gesamtinformation verknüpft werden können. Ferner ist die Relevanz einer Information abhängig von der Entfernung des gemeldeten Ereignisses zum Fahrzeug und von der Art der Meldung: Ein Hinweis auf einen großen Stau ist nur bei entsprechender Route des Fahrzeugs relevant. Demgegenüber kann aber die Information über eine kleinere Störung wichtig sein, wenn die Behinderung relativ nahe in Fahrtrichtung liegt und mit beibehaltener Fahrzeuggeschwindigkeit voraussichtlich vor Beseitigung erreicht wird.

In einer erweiterten Ausführungsform der Erfindung können über die Eingabemittel auch Vorgaben zur Bewertung von empfangenen Informationen (z.B. Zuteilen einer hohen Relevanz für Meldungen von einer speziellen Quelle oder einer bestimmten Informationskategorie) vom Fahrer individuell definiert werden. Beispielsweise sind für ein Speditionsoder Taxifahrzeug Meldungen einer Zentrale grundsätzlich von hoher Relevanz. So besteht die Möglichkeit eine (z.B. werkseitig vorgegebene) allgemeine Grundkonfiguration des Verkehrsdaten-Informationssystems auch bzgl. Relevanz-Bewertungskriterien an spezielle Gegebenheiten anzupassen.

Ein besonderer Vorteil ist hierbei die Möglichkeit, auch während der Fahrt - je nach Situation - die aktuellen Selektionsvorgaben des Verkehrsdaten-Informationssystems zu ändern:
Beispielsweise sind Informationen über Parkplätze bei der Durchfahrt von Orten entlang der Route erst dann relevant, wenn konkrete Halteabsicht besteht; Hinweise über nahegelegene Werkstätten haben nur bei Vorliegen eines Defektes Bedeutung und können nach entsprechender Eingabe mit höherer Relevanz an den Fahrer übermittelt werden.
Das beschriebene Verkehrsdaten-Informationssystem zeichnet sich aus durch die Fähigkeit, Informationen unterschiedlicher Kategorien von verschiedenen Quellen zu empfangen, zu speichern und nach vorgegebenen Kriterien bzgl. Informationsgüte und Relevanz auszuwerten. Die Weitergabe der so sortierten Informationen an den Fahrer erfolgt in der erfindungsgemäßen Ausführung durch Ansteuerung verschiedener Signalgeber und Wiedergabeeinrichtungen in der Weise, dass Informationen zusammen mit ihrer Informationsgüte und/oder Relevanz übermittelt werden.

Damit bietet das Informationssystem dem Fahrer eine schnell und zuverlässig erfaßbare Übersicht über wichtige Verkehrsdaten, ohne ihn von den Aufgaben der Fahrzeugsteuerung in einem unvertretbaren Maß abzulenken.

## Patentansprüche

1. Verkehrsdaten-Informationssystem für Fahrzeuge, mit Mitteln zum Empfang von verkehrsbezogenen Daten sowie Mitteln zur Wiedergabe der Daten,
wobei Mittel zur Speicherung und Verarbeitung der empfangenen Daten vorhanden sind, welche die empfangenen Daten aufgrund eines Kriteriums hinsichtlich ihrer Relevanz bewerten und unterschiedlichen Relevanzwerten der Daten unterschiedliche Wiedergabearten zugeordnet sind,
**dadurch gekennzeichnet, dass** als Kriterien wenigstens eines der folgenden Kriterien Alter, Herkunft, Übereinstimmung und/oder Häufigkeit der empfangenen Daten beinhaltet ist.

2. System nach Anspruch 1, **dadurch gekennzeichnet, dass** ein Mittel zur Wiedergabe so ausgebildet ist, dass es gleichzeitig unterschiedliche Daten mit einer ihrer jeweiligen Relevanz entsprechenden Wiedergabeart ausgibt.

3. System nach Anspruch 1 oder 2, **dadurch gekennzeichnet, dass** die bewerteten Kriterien zusätzlich den Inhalt der Daten oder die Informationsgüte als Kriterium enthalten.

4. System nach einem der Ansprüche 1 bis 3, **dadurch gekennzeichnet, dass** die Mittel zur Verarbeitung der empfangenen Daten auch fahrtbezogene Daten (z.B. Position, Route, Geschwindigkeit) und/oder fahrzeugbezogene Daten (z.B. Maße, Gewicht, Ladung) einbeziehen.

5. System nach einem der Ansprüche 1 bis 4, **dadurch gekennzeichnet, dass** die Mittel zur Wiedergabe der Daten akustische (z.B. Lautsprecher), optische (z.B. Display) und/oder haptische Signalgeber (z.B. Vibrationserzeuger) beinhalten.

6. System nach Anspruch 1 oder 5, **dadurch gekennzeichnet, dass** die den Mitteln zur Wiedergabe der Daten relevanzabhängig zugeordneten Wiedergabearten unterschiedliche Farbintensitäten, Farbhelligkeiten, Farben, Klangfarben, Tonhöhen, Lautstärken, haptische Ausschläge, haptische Frequenz und/oder haptische Widerstände zeigen.

7. System nach einem der Ansprüche 1 bis 6, **dadurch gekennzeichnet, dass** die Mittel zum Empfang verkehrsbezogener Daten auch GPS, Broadcast-, Mobilfunk- und/oder Interfahrzeug-Kommunikationssysteme beinhalten.

8. System nach einem der Ansprüche 1 bis 7, **dadurch gekennzeichnet, dass** Mittel zur Eingabe von Steuerbefehlen und/oder Daten vorhanden sind.

9. System nach Anspruch 8, **dadurch gekennzeichnet, dass** die Eingabemittel als manuelle (z.B. Keyboard, Touchscreen) und/oder akustische (z.B. Spracheingabe) Eingabevorrichtungen ausgebildet sind.

10. System nach einem der Ansprüche 1 bis 9, **dadurch gekennzeichnet, dass** die Mittel zur Speicherung und Verarbeitung der empfangenen Signale als programmierbares Prozessorsystem ausgebildet sind.

## Claims

1. Information system for traffic for vehicles, comprising means for receiving traffic-related and means for reproducing the data,
wherein means are provided for storing and processing the received data, which evaluate the received data on the basis of a criterion related to their relevance, and wherein different types of reproduction are assigned to different relevance values of the data,
**characterised in that** the criteria include at least one of the following: age, origin, compliance and/or frequency of the received data.

2. System according to claim 1, **characterised in that** the means for reproduction are designed such that different are output simultaneously in a type of reproduction corresponding to their relevance.

3. System according to claims 1 or 2, **characterised in that** the devaluated criteria further include the content of the data or the quality of the information.

4. System according to any of claims 1 to 3, **characterised in that** the means for processing the received data also take account of driving-related data (e.g. position, route, speed) and/or vehicle-related data (e.g. dimensions, weight, load),

5. System according to any of claims 1 to 4, **characterised in that** the means for reproducing the data include acoustic (e.g. loudspeaker), optical (e.g. display) and/or haptic (e.g. vibration generator) signal generators.

6. System according to claim 1 or 5, **characterised in that** the types of reproduction assigned to the means for reproducing the on the basis of their relevance produce different colour intensities, brightness levels, colours, tone qualities, pitches, volumes, haptic swings, haptic frequencies and/or haptic resistances.

7. System according to any of claims 1 to 6, **characterised in that** the means for receiving traffic-related data further include GPS, broadcast, cellular and/or inter-vehicle communication systems.

8. System according to any of claims 1 to 7, **characterised in that** means are provided for inputting control commands and/or data.

9. System according to claims 8, **characterised in that** the input means are designed as manual (e.g. keyboard, touch screen) and/or acoustic (e.g. speech input) input devices.

10. System according to any of claims 1 to 9, **characterised in that** the means for storing and processing the received signals are designed as a programmable processor system.

## Revendications

1. Système d'information et de données de trafic pour des véhicules, comportant des moyens pour recevoir des données concernant la circulation routière ainsi que des moyens pour restituer les données, des moyens destinés au stockage et au traitement des données reçues évaluent les données reçues en fonction d'un critère de pertinence et les valeurs de pertinence des données sont associées à différents modes de restitution, **caractérisé en ce que** les critères impliquent au moins un des critères suivants, l'ancienneté, l'origine, la cohérence et / ou fréquence des données reçues,

2. Système selon la revendication 1, **caractérisé en ce qu'**un moyen de restitution est conçu de telle sorte qu'il restitue différentes données simultanément avec un mode de restitution correspondant à sa pertinence respective.

3. Système selon la revendication 1 ou 2, **caractérisé en ce que** les critères évalués contiennent également le contenu des données ou la qualité de l'information en tant que critère.

4. Système selon l'une quelconque des revendications 1 à 3, **caractérisé en ce que** les moyens de traitement des données intègrent également des données relatives au trajet (par exemple la position, le trajet, la vitesse) et / or des données concernant le véhicule (par exemple la taille, le poids, le changement).

5. Système selon l'une quelconque des revendications 1 à 4, **caractérisé en ce que** les moyens de restitution des données contiennent des transmetteurs de signaux acoustiques (par exemple un haut-parleur), optiques (par exemple un écran) et / ou haptiques (par exemple un générateur de vibrations).

6. Système selon la revendication 1 ou 5, **caractérisé en ce que** les modes de restitution aux moyens de restitution des données en fonction de la pertinence indiquent les différentes intensités de couleur, les brillances des couleurs, les couleurs, les timbres acoustiques, les hauteurs du son, les intensités sonores, les oscillations haptiques, la fréquence haptique et / ou les résistances haptiques.

7. Système selon l'une quelconque des revendications 1 à 6, **caractérisé en ce que** les moyens pour réception des données concernant la circulation routière contiennent également des systèmes de communication GPS, de diffusion, de radiocommunication et / ou embarqués.

8. Système selon l'une quelconque des revendications 1 à 7, **caractérisé en ce que** sont prévus des moyens pour saisir des instructions de commande et / ou des données.

9. Système selon la revendication 8, **caractérisé en ce que** les moyens de saisie sont conçus sous forme de dispositifs de saisie manuelle (par exemple clavier, écran tactile) et / ou acoustiques (par exemple entrée vocale).

10. Système selon l'une quelconque des revendications 1 à 9, **caractérisé en ce que** les moyens de stockage et de traitement des signaux reçus sont conçus sous forme de système de processeur programmable.
